# EUROPEAN PATENT SPECIFICATION

(11) **EP 0 677 156 B1**
(45) Date of publication and mention of the grant of the patent: **23.09.1998**
(21) Application number: 94904021.6
(22) Date of filing: 17.12.1993
(51) Int. Cl.: F16K 11/02, F16K 3/10

(54) **VALVE WITH A ROTATING AND TRANSLATING VALVE MEMBER**
ARMATUR MIT EINEM DREHBAREN UND VERSCHIEBBAREN ABSCHLUSSKÖRPER
VANNE A ELEMENT ROTATIF ET TRANSLATABLE

(30) Priority: 21.12.1992 NZ 24553992
(43) Date of publication of application: 18.10.1995
(73) Proprietor: BRADDOCK, Hayden, Langley, Takapuna Auckland 1309 (NZ); BRADDOCK, Ingrid, Jane, Torbay Auckland 1310 (NZ)
(72) Inventor: BRADDOCK, Darryl, Malcolm, Langley, Takapuna Auckland 1309 (NZ)
(74) Representative: Denmark, James
(86) International application number: NZ9300127
(87) International publication number: WO9415126

(56) References cited:
- AU-A- 895 922
- AU-A- 2 966 749
- DE-B- 1 007 582
- FR-A- 1 084 629
- GB-A- 205 696
- GB-A- 245 427
- GB-A- 272 353
- US-A- 1 467 816
- US-A- 2 311 989
- US-A- 3 837 360
- US-A- 4 156 437

## Description

### Technical Field

This invention relates to improvements and/or relating to valves.

### Background Art

Reference throughout this specification shall be made to use of the present invention for use of valves to control the flow of liquids. however it should be appreciated that principles of the present invention can be used to control the flow of other materials such as gases. particulate material and so forth.

Reference throughout this specification shall also be made to use of the present invention in primarily domestic situations in relation to taps. mixer valves for showers and so forth. It should be appreciated however that the present invention can be applied to much broader applications such as industrial. laboratory, agricultural and so forth. The discussion of domestic taps and shower mixer valves is merely included for ease of reference.

Conventional taps have as their fluid control means a valve stem which is connected at one end to a tap handle. The other end of the valve stem is connected to a seal. generally in the form of a washer. When the tap is turned off, the washer is pressed firmly against a valve scat connected to a fluid line. Turning the tap on by rotating the tap handle causes the valve stem to move directly upwards pulling the washer away from the valve seat. This allows fluid from the fluid line to flow through the port associated with the valve seat which was previously closed off by the valve stem. Unfortunately, there are a number of problems associated with this type of tap. One problem is that the control mechanism is bulky which makes it difficult to install. Another problem is that the mechanism is fairly complex involving many parts thus, leading to considerable costs in manufacture and in maintenance. particularly as most of the parts are made from metal. Yet a further problem is that the washers used are subject to wear and the valvc is inclined to leak upon the slightest degradation of the washer.

In an attempt to address at least some of these problems. ceramic seal valves were invented. These valves involve two ceramic discs which sit on top of each other. Both discs have apertures therein. When a tap is turned off, the upper disc is positioned so that it blocks the aperture on the lower disc. -To turn the tap on, the handle causes the upper disc to slide over the lower disc until the aperture in the top upper disc is aligned with the aperture in the lower disc thus allowing fluid to flow therethrough.

Unfortunately, this valve arrangement also has its problems. One disadvantage is that the discs require high precision manufacturing to ensure that they can slide over each other without wear or leakage occurring. Any contamination in the form of grit or other particles that makes its way between the discs however will cause leakage as the discs are required to be perfectly smooth with respect to each other to work. Yet another problem is that ceramic discs are costly to manufacture as it is generally a multi-stage step including firing, machining and so forth. Within the prior art. United States Patent Number 2311989 describes a valve assembly which includes a valve stem attached to a rotor plate with a number of fluid ports being located underneath the rotor plate.

The rotor plate includes a hollow boss which extends along a length of the plate and acts to connect the two fluid ports together. The rotor plate may be rotated with use of a lever attached to the valve stem.

United States Patent Number 1467816 (which forms a basis for the preamble of claim 1) describes a valve assembly which employs a threaded screw mechanism to positively urge a valve seat and bearing surface together.

British Patent Number 205696 discloses a valve and tap assembly. The valve assembly consists of two fluid ports used in conjunction with a bearing surface containing a fluid channel. The bearing surface may be rotated so the channel is moved either into line with the fluid ports. or out of line with the fluid ports.

It is an object of the present invention to address the above problems, or at least to improve the prior art devices and to provide the public with a useful choice.

Further objects and advantages of the present invention will become apparent from the following description which is given by way of example only.

### DISCLOSURE OF THE INVENTION

According to one aspect of the present invention there is provided a control means for a valve assembly including a bearing surface for interaction with at least one port, the bearing surface having an indentation out of the plane of the bearing surface, the control means including a thread. whereby the thread can move the bearing surface to and from the port, said thread also capable of sliding the indentation in the bearing surface with respect to the port.

The bearing surface may come in a variety of forms, although in preferred embodiments it is substantially a smooth surface which when pressed against a similarly smooth surface surrounding a port can act to seal same.

The indentation in the bearing surface may also come in a variety of forms. In some embodiments. the indentation may be a shallow scalloping or some other form of contouring of the bearing surface. In alternate embodiments, the indentation may be a full port which provides a fluid conduit through from one side of the bearing surface to the other.

The preferred means by which the control means is operated is by rotation which is a familiar movement to most operators of domestic taps and shower mixer valves. Wherein most situations the control means will be manually rotatable. it is envisaged that in industrial applications the control means may be moved by other means. for example by electric motors and the like.

A control means as described above has a number of advantages over the prior art. The provision of a thread means that less precision is required in the manufacture of the bearing surface and port. This is because the thread can positively urge the bearing surface against the port and any potential problems which could be caused by inaccurate manufacture, slop due to wear on the parts. grit between the port and the bearing surface are merely overcome by turning the bearing surface tighter on the thread.

The provision of an indentation on the bearing surface which can slide with respect to the port provides considerable control over the amount of fluid which can pass through the port.

It can be seen that a control means in accordance with the prcsent invention can be easily used with valve assemblies. tap assemblies. shower mixer valves and the like.

In some embodiments of the present invention, there may be provided more than one port. For example. the present invention may be used with hot and cold water lines connected to two ports. The indentation may in this example be of a shape and size that one position of the control means has the indentation aligned with both of the ports. Turning the control means in either direction will slide the indentation away from at least one of the ports and causing the bearing surface to at least partially cover one or more of the ports. It can be seen that in this embodiment it is a relatively simple matter to control the amount of fluid passing through each of the ports. From this. it is therefore a relatively easy step to allow mixing of the fluids in different ratios to each other.

In one embodiment of the present invention the port may be an aperture through a bearing surface similar to the bearing surface in the control means. If the two bearing surfaces are sealed around their respective edges. then operation of the control means can be such that its bearing surface moves away from the bearing surface associated with the port and thereby creates a chamber into which fluid can flow. This chamber may be connected directly to an output or into another chamber which allows for mixing of the fluid and/or fluids. However, one difficulty with this construction is that the bearing surface of the control means is required to move a reasonable distance before a chamber of required volume is produced.

In an alternate embodiment of the present invention the indentation in the bearing surface of the control means may be a channel which leads through to a chamber. Thus. sliding the indentation over the port allows fluid to flow through the indentation and into the chamber which likewise can be connected to an outlet or a further mixing chamber. A disadvantage of this embodiment however is that the chamber is required to be on the opposite side to the control means from the inlet port which makes the control means side of the whole valve assembly bulky. Preferably for aesthetic reasons the control means has minimal bulk as it should be accessible for manual opcration. Therefore. it is prcferred that any chambers for the valve assembly are on the inlet port side of the control means.

In a preferred embodiment of the present invention, the port is positioned in a chamber which is defined by the bearing surface of the control means and a wall in the valve assembly with which the control means is associated. This construction enables the bearing surface of the control means to only move a minimal distance before the fluid is capable of filling a chamber having volume. It can therefore be seen that this construction is one which provides minimal bulk to the control means.

It can therefore be appreciated that in addition to providing advantages as discussed previously. the present invention is capable of providing an aesthetically pleasing compact control member for a valve assembly.

There are other advantages associated with the present invention. For example, construction of the present invention is such that it is suited for manufacture from plastics material which is a considerably cheaper material and involves cheaper manufacturing processes than ceramics or metal.

Yet another advantage of the present invention is that there are no parts which are required to be replaced on the account of undue wear thereof.

### BRIEF DESCRIPTION OF DRAWINGS

Aspects of the present invention will now be described by way of example only with reference to the accompanying drawings in which-.-
- Figure 1: is a diagrammatic external view of a mixer valvc in accordance with one embodiment of the present invention:
- Figure 2: is a diagrammatic cross-sectional view of the mixer valve illustrated in Figure 1;
- Figure 3: is a end on cross-sectional view of the valve assembly illustrated in Figure 2, and
- Figure 4: is a diagrammatic view illustrating a bearing surface and indentation of the control means in relation to fluid inlet ports in accordance with one embodiment of the present invention.

### BEST MODES FOR CARRYING OUT THE INVENTION

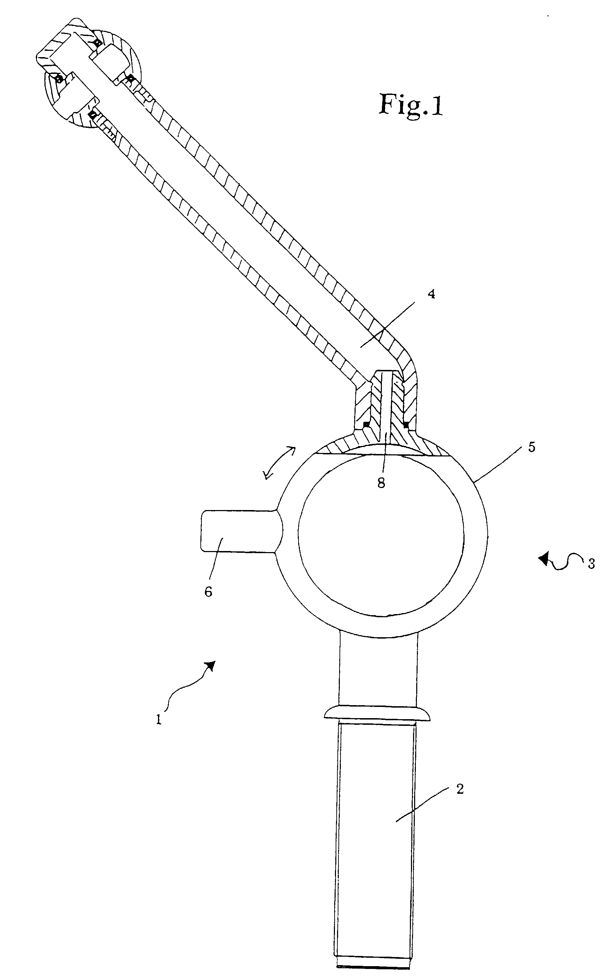

With respect to Figure 1, there is illustrated a mixer valve generally indicated by arrow 1. The mixer valve I has a fluid inlet 2, a valve assembly generally indicated by arrow 3, and a fluid outlet 4.

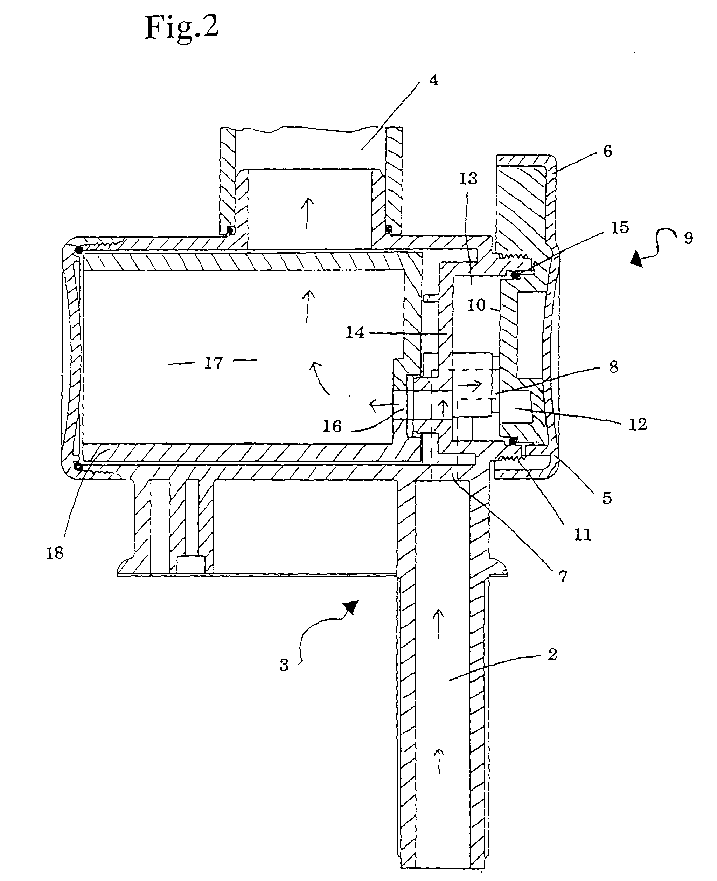

The valve assembly 3 has a cap 5 which can be rotated by moving a control lever 6 in the direction shown. The cap 5 is directly connected to the control means (see Figures 2, 3 and 4) of the valve assembly 3.

Figure 2 is a cross-sectional side view of valve assembly 3 illustrated in Figure 1.

The fluid inlet 2 is connected to an inlet port 7 shown in a dotted outline. On the outlet of the port 7 is a seal 8 which in this embodiment is made from Teflon™. Fluid can flow in through the fluid inlet 2 through the port 7 and out through the outlet 8 in the direction of the arrows shown.

The control means for the valve assembly 3 is generally indicated by arrow 9. The control means 9 has a bearing surface 10 which can interact with the outlet 8 of the port 7.

Translational means in the form of threads 11 enable the whole of the control member 9 to rotate as a consequence of an operator pushing sideways against the handle 6. This rotation causes the bearing surface 10 to move towards and away from the outlet 8 depending upon the direction of rotation of the control member 9.

The bearing surface 10 has an indentation 12. Rotation of the control member 9 also acts to slide the indentation 12 with respect to the outlet 8.

The port 7 is positioned within a chamber 13 which is formed by a wall 14 in the valve assembly 3 and the bearing surface 10. A seal 15 positioned adjacent to the bearing surface 10 and thread 11 ensures that any fluid which enters the chamber 13 does not exit to the outside of the valve assembly 3.

When the control means 9 is turned so that the indentation 12 is positioned opposite the outlet 8. fluid can flow from the inlet 2 into the chamber 13. This tluid can then flow from the chamber 13 through a channel 16 into a second chamber 17.

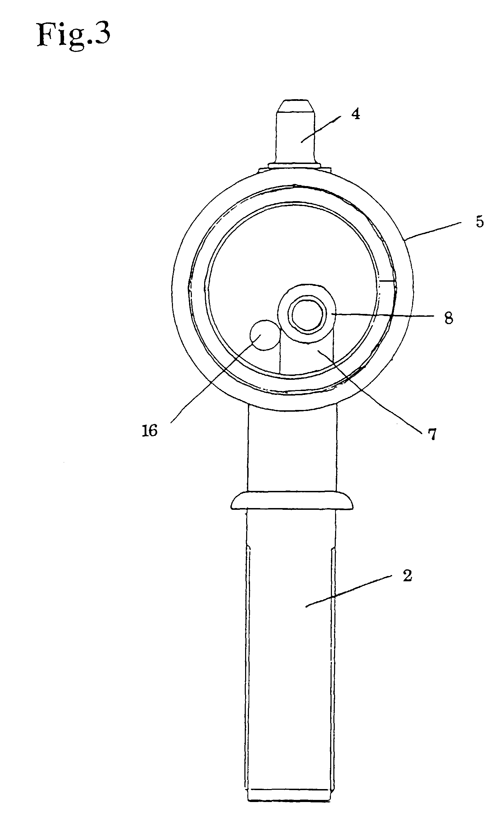

The relationship between the outlet 8 and conduit 16 can be best seen in Figure 3.

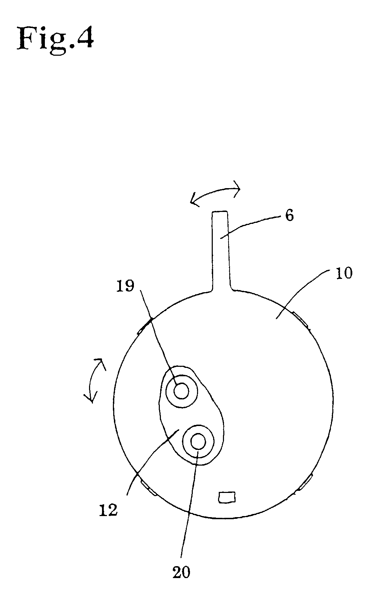

In this embodiment. the purpose of the chamber 17 is twofold. The first reason is to act as a mixing chamber if there are two or more fluid inlets (such as shown in Figure 4) to ensure that even mixing occurs. The second purpose is to provide a means by which the fluid entering the valve assembly 3 can be filtered before exiting the outlet 4. This is achieved by the use of a filter 18 which surrounds the chamber 17 through which the fluid is required to pass before exiting through the outlet 4.

It should be appreciated in some embodiments of the present invention. there will be no requirement for the chamber 17 and fluid may exit from the chamber 13 directly to the outlet 4 or even in some embodiments directly from the outlet 8.

Figure 4 illustrates an embodiment of the present invention which has two fluid inlets (instead of one as previously described). In Figure 4 the indentation 12 is shown as being positioned over a first fluid inlet 19 and a second fluid inlet 20. In this embodiment. the first fluid inlet 19 is connected to the cold water supply and the second fluid inlet 20 is connected to the hot water supply.

In the position shown. the indentation 12 allows water to flow through both of the inlets 19 and 20 in any proportions. Rotation of the handle 6 in either of the directions shown moves the indentation 12 so that the bearing surface 10 will fully or partially cover one or both of the inlets 19 and 20.

It can be seen from Figure 4 that movement of the handle 6 clockwise to the hard right will cause the bearing surface 10 to fully cover the inlets 19 and 20, thus preventing any fluid flow and effectively turning the tap "off". Rotation of the handle anticlockwise causes the indentation 12 to uncover the inlet 19, thus controlling the amount of cold water passing into the shower mixer. Further rotation of the handle 6 in an anticlockwise direction causes the indentation 12 to uncover the inlet 20 while still permitting water to flow from the inlet 19. This allows the fluids from the two inlets to mix in varying ratios depending on the amount the inlets 19 and 20 are uncovered respectively. Yet further rotation of the handle 6 anticlockwise causes the inlet 19 to be covered by the bearing surface 10 while the inlet 20 remains uncovercd thus allowing just hot water to flow into the mixer 1. Yet further rotation of the handle 6 can cause both the inlets 19 and 20 to be fully covered by the bearing surface. In some embodiments. this may not be the case and the handle 6 may be required to be returned clockwise to a stop position.

Aspects of the present invention have been described by way of example only and it should be appreciated that modifications and additions may be made thereto without departing from the scope thereof as defined in the appended claims.

## Claims

1. A control means (9) for a valve assembly (3) including a bearing surface (10) for interaction with at least one port (7), the control means (9) including a thread (11), whereby the thread (11) can move the bearing surface (10) to and from the port (7), said thread (11) also capable of sliding the bearing surface (10) with respect to the port (7), characterised in that the bearing surface (10) has an indentation (12) out of the plane of the bearing surface (10).

2. A valve assembly (3) including a control means (9) as claimed in claim 1.

3. A valve assembly (3) as claimed in claim 2 wherein there is created a chamber (13) between the bearing surface (10) and a wall (14) of the valve assembly (3), said chamber (13) being capable of receiving fluid from a port (7) associated with the control means (9).

4. A valve assembly (3) as claimed in either claim 2 or claim 3 which has at least two ports (19, 20) associated with the control means (9).

5. A tap assembly including a valve assembly as claimed in any one of the previous claims.

6. A shower mixer incorporating a valve assembly as claimed in any one of the previous claims.

## Patentansprüche

1. Steuermittel (9) für eine Ventilbaugruppe (3) mit einer Anlagefläche (10) für die Wechselwirkung mit wenigstens einer Öffnung (7), wobei das Steuermittel (9) ein Gewinde (11) aufweist, wobei das Gewinde (11) die Anlagefläche (10) zu und von der Öffnung (7) bewegen kann, wobei das genannte Gewinde (11) auch in der Lage ist, die Anlagefläche (10) in bezug auf die Öffnung (7) zu verschieben, dadurch gekennzeichnet, daß die Anlagefläche (10) eine Vertiefung (12) aus der Ebene der Anlagefläche (10) hat.

2. Ventilbaugruppe (3) mit einem Steuermittel (9) nach Anspruch 1.

3. Ventilbaugruppe (3) nach Anspruch 2, bei der eine Kammer (13) zwischen der Anlagefläche (10) und einer Wand (14) der Ventilbaugruppe (3) entsteht, wobei die genannte Kammer (13) Fluid von einer Öffnung (7) in Verbindung mit dem Steuermittel (9) aufnehmen kann.

4. Ventilbaugruppe (3) nach Anspruch 2 oder Anspruch 3, die wenigstens zwei Öffnungen (19, 20) in Verbindung mit dem Steuermittel (9) hat.

5. Hahnbaugruppe mit einer Ventilbaugruppe nach einem der vorherigen Ansprüche.

6. Brausemischer mit einer Ventilbaugruppe nach einem der vorherigen Ansprüche.

## Revendications

1. Un moyen de contrôle (9) pour un ensemble vanne (3) comportant une surface portante (10) destiné à agir en interaction avec au moins un orifice (7), le moyen de contrôle (9) comprenant un filetage (11), grâce auquel le filetage (11) peut déplacer la surface portante (10) pour la rapprocher et l'éloigner de l'orifice (7), ledit filetage (11) étant également capable de faire glisser la surface portante (10) par rapport à l'orifice (7), caractérisé en ce que la surface portante (10) présente une indentation (12) située hors du plan de la surface portante (10).

2. Un ensemble vanne (3) comportant un moyen de contrôle (9), selon les stipulations de la revendication 1.

3. Un ensemble vanne (3) selon les stipulations de la revendication 2, dans lequel il se crée une chambre (13) entre la surface portante (10) et une paroi (14) de l'ensemble vanne (3), ladite chambre (13) étant capable de recevoir du liquide à partir d'un orifice (7) qui est associé au moyen de contrôle (9).

4. Un ensemble vanne (3) selon les stipulations de la revendication 2 ou de la revendication 3, qui possède au moins deux orifices (19, 20) qui sont associés au moyen de contrôle (9).

5. Un ensemble robinet, comprenant un ensemble vanne, selon les stipulations de l'une quelconque des revendications précédentes.

6. Un mitigeur de douche incorporant un ensemble vanne, selon les stipulations de l'une quelconque des revendications précédentes.
